# EUROPÄISCHE PATENTSCHRIFT

(11) **EP 1 524 407 B1**
(45) Veröffentlichungstag und Bekanntmachung des Hinweises auf die Patenterteilung: **09.11.2016**
(21) Anmeldenummer: 04090379.1
(22) Anmeldetag: 29.09.2004
(51) Int. Cl.: F01D 5/14, F04D 29/32, F02K 3/06, F04D 29/38

(54) **Hohlfanschaufel für Flugzeugtriebwerke und Verfahren zu deren Herstellung**
Hollow fan blade for aircraft engines and production method therefor
Aube de soufflante creuse et sa méthode de production

(30) Priorität: 14.10.2003 DE 10349073
(43) Veröffentlichungstag der Anmeldung: 20.04.2005
(73) Patentinhaber: Rolls-Royce Deutschland Ltd & Co KG, 15827 Dahlewitz (DE)
(72) Erfinder: Schreiber, Karl, Dipl. -Ing., 15806 Mellensee (DE)
(74) Vertreter: Maikowski & Ninnemann Patentanwälte Partnerschaft mbB

(56) Entgegenhaltungen:
- FR-A- 970 578
- GB-A- 1 089 247
- US-A- 1 998 393
- US-A- 2 463 340
- US-A- 2 848 193
- US-A- 5 711 068

## Beschreibung

Die Erfindung betrifft eine Hohlfanschaufel für den Fan eines Flugzeugtriebwerks mit in der Schaufel ausgebildeten Hohlräumen zur Gewichtsverringerung sowie ein Verfahren zu deren Herstellung.

Fanschaufeln sind die ersten rotierenden Gebilde in einem Flugzeugtriebwerk und sind daher einer erheblichen Belastung, insbesondere in der Startphase durch angesaugte Fremdkörper, wie beispielsweise Vögel, ausgesetzt. Um den extrem hohen Belastungen standzuhalten, sind die Fanschaufeln aus einem hochfesten Metall, einer Metalllegierung oder faserverstärkten Polymeren mit metallischem Vorderkantenschutz mit hoher Festigkeit gefertigt und entsprechend stark dimensioniert. Derartige massiv ausgebildete Schaufeln sind zum einen wegen des hohen Anteils an teuerem Material sehr kostenaufwendig und zum anderen ist die mechanische Belastung auf der Grundlage der Eigenschwingungen und der Schwingungsamplitude sowie der Zentrifugalkräfte hoch. Entsprechend dem hohen Gewicht massiv ausgebildeter Schaufeln müssen auch die Fan-Containments dimensioniert werden, so dass sich das Gewicht des Flugzeugtriebwerks weiter erhöht und zusätzliche Kosten entstehen.

Für Flugzeugtriebwerke mit hoher Leistung wurden zur Verringerung des Gewichts und zur Beseitigung der durch ein hohes Gewicht bedingten Nachteile bereits Hohlfanschaufeln, das heißt, Fanschaufeln mit in deren Innerem ausgebildeten Hohlräumen entwickelt. Die bekannten, beispielsweise in den US 5 692 881 und 6 033 186 beschriebenen Hohlschaufeln stellen sogenannte gebaute Strukturen dar, die mit aufwendigen Umform- und Fügeprozessen hergestellt werden und dementsprechend teuer sind.

Darüber hinaus wurde bereits vorgeschlagen, mit bekannten materialabtragenden Verfahren, beispielsweise dem ECM (E-lectro Chemical Maschining)-Verfahren oder dem EDM (E-lectro Discharge Maschining)-Verfahren, von der Schaufelspitze ausgehende, in Richtung des Schaufelfußes verlaufende langgestreckte Hohlräume in der Schaufel auszuformen. Das Verfahren bzw. die danach hergestellten Schaufeln sind jedoch insofern nachteilig, als die Hohlräume wegen der gekrümmten Ausbildung der Schaufeln nur in einem begrenzten Spitzenbereich ausgeformt werden können, so dass die Gewichts- und Kosteneinsparung gering bleibt.

Eine in der GB 1089247 beschriebene Hohlfanschaufel umfasst einen Schaufelfuß aus massivem Material und ein aus einer Blechkonstruktion bestehendes hohles Schaufelblatt, die jeweils getrennt gefertigt sind und an den stirnseitigen Fügeflächen miteinander verschweißt sind.

Aus der US 2463340 ist eine aus Blechteilen gebildete ohle Turbinenschaufel bekannt, die über eine Fügeverbindung mit einem integral an die Rotorscheibe angeformten, eine Vertiefung aufweisenden Schaufelansatz aus massivem Material verbunden ist.

Derartige Schaufelstrukturen genügen nicht den an Hohlfanschaufel gestellten hohen Festigkeitsanforderungen.

Die US 2 848 193 beschreibt eine Hohlfanschaufel.

Die US 5711068 beschreibt eine aus einem Schaufelblatt und einem Schaufelfuß bestehende Hohlfanschaufel, bei der zwei vorgeformte Seitenteile durch Diffusionsschweißen miteinander verbunden werden.

Der Erfindung liegt die Aufgabe zugrunde, ein Verfahren zu entwickeln, das die Fertigung von Hohlfanschaufeln mit geringem Gewicht und hoher mechanischer Festigkeit sowie mit geringem Herstellungs- und Kostenaufwand erlaubt, sowie eine nach dem Verfahren hergestellte Hohlfanschaufel anzugeben.

Erfindungsgemäß wird die Aufgabe mit einer gemäß den Merkmalen des Patentanspruchs 1 ausgebildeten Hohlfanschaufel sowie mit einem Verfahren nach den Merkmalen des Anspruchs 8 gelöst. Vorteilhafte und zweckmäßige Weiterbildungen der Erfindung ergeben sich aus den jeweiligen Unteransprüchen.

Erfindungsgemäß ist die Hohlfanschaufel, gemäss Anspruch 1, aus zwei in einem Fügeverfahren verbundenen Schaufelteilen hergestellt und besteht aus einem Schaufelbasisteil und einem Schaufelspitzenteil, wobei das Schaufelspitzenteil lediglich den gering belasteten oberen Bereich der Hohlfanschaufel umfasst. Durch die geteilte Ausführung ist es möglich, dass in eine aus massivem Material bestehende Fanschaufel in einem großen Bereich Hohlräume ausgebildet werden können, die ausgehend von den gegenüberliegenden freien Fügeflächen der getrennten Schaufelteile mit bekannten Verfahren, beispielsweise durch elektrochemische Bearbeitung, erzeugt werden. Die Teilung der Schaufel ist in einem Bereich vorgesehen, in dem die Fügeverbindung den an dieser Stelle wirkenden Kräften ohne Weiteres standhält und die Ausbildung einer solchen Verbindung mithin möglich und zulässig ist, da weder Zuverlässigkeit noch Lebensdauer beeinflusst werden. Das angefügte Schaufelspitzenteil kann aber auch aus einer Blechkonstruktion bestehen, die größere Hohlräume und demzufolge ein geringeres Gewicht als ein aus massivem Material gefertigtes Schaufelspitzenteil aufweist und die ebenfalls mit bekannten Fügeverfahren, zum Beispiel Laserschweißen, mit dem aus massivem Material bestehenden, Hohlräume aufweisenden Schaufelbasisteil verbunden wird. Der im Spitzenbereich durch Fügen verbundene Bereich kann filigran ausgeführt werden, da die Betriebsbelastungen vergleichsweise gering sind (z. B. Spannungen bis max. 150 Mpa). Im Falle von FOD (sog. foreign object damage)ist der mögliche Masseverlust an der Fanschaufelspitze so gering, dass die dadurch erzeugte Unwucht nicht zum automatischen Abschalten des Triebwerkes führt.

Ein Ausführungsbeispiel der Erfindung wird anhand der Zeichnung näher erläutert. Es zeigen:
- Fig. 1: in schematischer Darstellung eine nach dem erfindungsgemäßen Verfahren aus einem Schaufelbasisteil und einem Schaufelspitzenteil, die jeweils aus massivem Material bestehen, hergestellte Hohlfanschaufel in einer Seitenansicht; und
- Fig. 2: eine Seitenansicht der Hohlfanschaufel nach Fig. 1, jedoch mit einem als Blechkonstruktion ausgebildeten Schaufelspitzenteil.

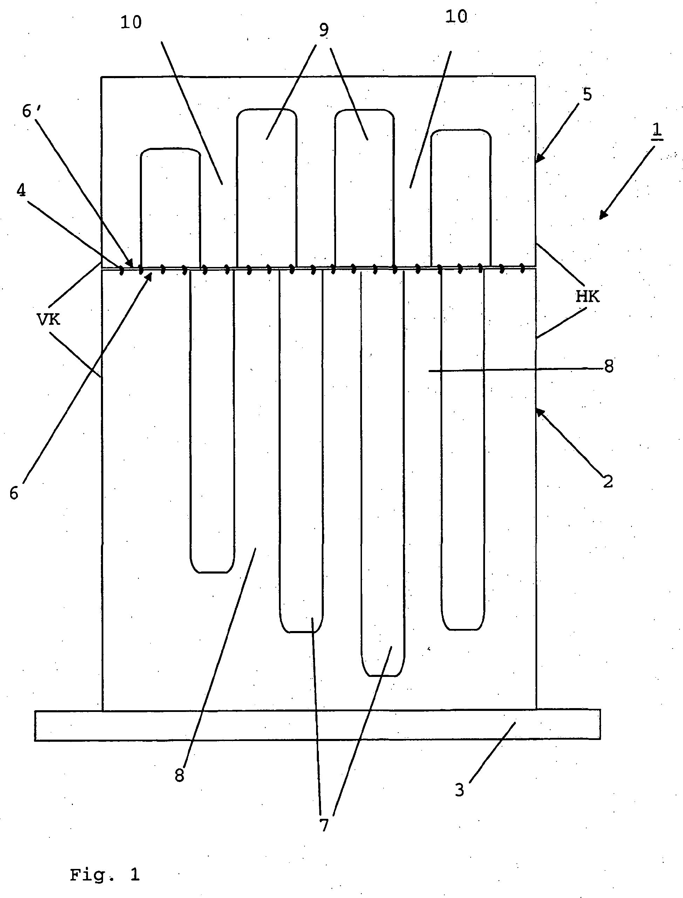

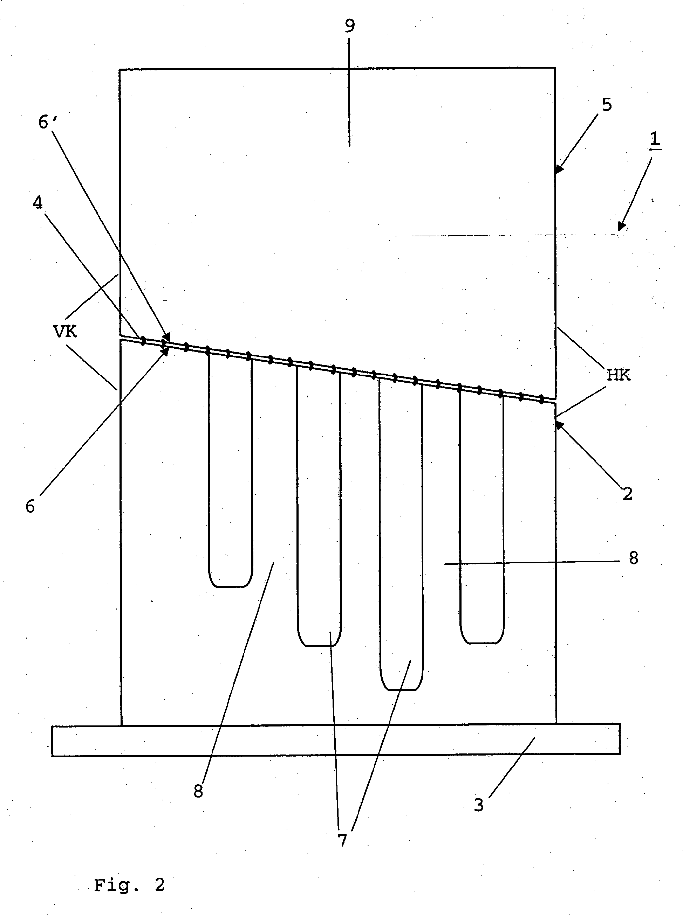

Die Fanschaufel 1 ist gemäß Fig. 1 und 2 zweiteilig ausgebildet und besteht aus einem Schaufelbasisteil 2 (unteres Schaufelteil 2) mit Schaufelfuß 3 sowie einem mit dem Schaufelbasisteil 2 über eine Fügenaht 4 verbundenen Schaufelspitzenteil 5 (oberes Schaufelteil 5). Das Schaufelbasisteil 2 gemäß Fig. 1 und 2 ist aus Metall, wie zum Beispiel Titan, oder einer Metalllegierung gefertigt und weist im Innern mehrere, von seiner oberen Fügekante 6 ausgehende langgestreckte Hohlräume 7 mit im Wesentlichen rechteckiger bis ovaler oder runder Querschnittsfläche auf. Die Hohlräume 7 sind so dimensioniert, dass über die verbleibende Wandstärke und die Stärke der zwischen den Hohlräumen 7 gebildeten Versteifungsstege 8 eine den hohen Belastungen und Festigkeitsanforderungen in diesem Bereich genügende Fanschaufel 1 zur Verfügung gestellt wird. Das gilt gleichermaßen für die Tiefe der Hohlräume 7, die in einem mittleren Bereich größer sein kann als in den höher belasteten Außenbereichen in der Nähe der Vorderkante VK bzw. der Hinterkante HK der Fanschaufel 1.

Das Schaufelspitzenteil 5 umfasst den oberen, geringeren Belastungen ausgesetzten Bereich der Fanschaufel 1 und kann daher - neben der Ausbildung aus massivem Material - auch, wie Fig. 2 zeigt, aus einer Blechstruktur, bestehend aus in einem Umformprozess hergestellten und miteinander verschweißten Blechteilen, aufgebaut sein.

Gemäß der in Fig. 2 wiedergegebenen Darstellung ist die Blechkonstruktion an der Spitze offen, wobei eine Außenwand nur einen einzigen Hohlraum umfasst.

Ein gemäß Fig. 1 aus massivem Material bestehendes Schaufelspitzenteil 5 weist - ähnlich dem Schaufelbasisteil 2 - von seiner unteren Fügekante oder Fügefläche 6' ausgehende Hohlräume 9 auf. Grundsätzlich kann bei dem geringer belasteten Schaufelspitzenteil 5, und zwar unabhängig davon, ob es aus massivem Material geformt oder einer geschweißten Blechkonstruktion gebildet ist, die Stärke der gegenüberliegenden Außenwände sowie der zwischen den Hohlräumen 9 bestehenden Versteifungsstege 10 geringer sein als bei dem Schaufelbasisteil 2. Bezüglich der Dimensionierung sowie der Anordnung bzw. Verteilung der Hohlräume 9 im Schaufelspitzenteil 5 gelten die oben hinsichtlich des Schaufelbasisteils 2 getroffenen Feststellungen gleichermaßen.

Das Verfahren zur Herstellung der oben beschriebenen Fanschaufel 1 umfasst gemäß einer ersten und zweiten Ausführungsvariante das Trennen einer massiv ausgebildeten Fanschaufel mit einem Trennverfahren in ein Schaufelbasisteil 2 und ein Schaufelspitzenteil 5 bzw. die separate Fertigung eines massiven Schaufelbasisteils 2 und eines massiven Schaufelspitzenteils 5.

Ausgehend von der an der jeweiligen Fügekante 6, 6' bestehenden freien Fügefläche werden mit bekannten Materialentnahmeverfahren, hier dem ECM-Verfahren, die Hohlräume 7 bzw. 9 in der oben erläuterten Ausbildung in den jeweiligen massiven Schaufelkörper eingeformt. Anschließend werden die beiden aus massivem Material hergestellten Schaufelteile 2 und 5 an den Fügekanten 6, 6' über eine mit einem bekannten Fügeverfahren, hier dem Laserschweißen, erzeugte Fügenaht 4 miteinander verbunden. Das Verbinden der beiden Schaufelteile 2 und 5 mit einem geeigneten Schweißverfahren stellt keine Gefahr in Bezug auf einen Schaufelbruch dar, da die Fanschaufel 1 in diesem oberen Bereich nur gering belastet ist.

Gemäß einer dritten Verfahrensvariante wird das Schaufelbasisteil 2 separat aus massivem Material gefertigt, während das Schaufelspitzenteil 5 ebenfalls separat hergestellt, aber aus einer mehrteiligen, durch Schweißen verbundenen Blechstruktur der oben beschriebenen Art aufgebaut wird. Die so ausgebildeten Schaufelteile 2 und 5 werden ebenfalls an den Fügekanten mit einem geeigneten Fügeverfahren, hier: Laserschweißen, miteinander verbunden. Andere geeignete Schweißverfahren sind das TIG- oder das EB-Schweißen.

Die in den zuvor erläuterten Ausführungsformen hergestellten Hohlfanschaufeln können kostengünstig und mit gegenüber den bekannten Hohlfanschaufeln deutlich verringerter Masse gefertigt werden. Damit verbunden ist eine erhebliche Scheibenlast- und G-Force-Reduzierung, in deren Folge auch Gewichtseinsparungen bei der Scheibe und dem Fan-Containment möglich sind. Besonders kostengünstig und gewichtssparend kann die Hohlfanschaufel dann hergestellt werden, wenn das gering belastete Schaufelspitzenteil als Blechbauteil gefügt wird, das eine filigrane und duktile Blechstruktur aufweist.

### Bezugszeichenliste

- 1: Fanschaufel
- 2: Schaufelbasisteil
- 3: Schaufelfuß
- 4: Fügenaht
- 5: Schaufelspitzenteil
- 6: obere Fügekante/Fügefläche
- 6': untere Fügekante/Fügefläche
- 7: erster Hohlraum
- 8: erster Versteifungssteg
- 9: zweiter Hohlraum
- 10: zweiter Versteifungssteg
- VK: Vorderkante
- HK: Hinterkante

## Patentansprüche

1. Hohlfanschaufel für den Fan eines Flugzeugtriebwerkes mit in der Schaufel ausgebildeten Hohlräumen (7, 9) zur Gewichtsreduzierung, bestehend aus quer zur Schaufellängsachse geteilten, an gegenüberliegenden Fügeflächen (6, 6') durch eine Fügeverbindung (4) verbundenen, ein Schaufelblatt (2, 5) und einen Schaufelfuß (3) umfassenden Schaufelteilen, die sich ausgehend von der Fügeverbindung (4) in entgegengesetzte Richtungen erstrecken, wobei die Fügeverbindung (4) die Hohlfanschaufel (1) in ein an den Schaufelfuß (3) anschließendes Schaufelbasisteil (2) und in ein den wenig belasteten Schaufelspitzenbereich bildendes Schaufelspitzenteil (5) teilt, in denen ausgehend von der jeweiligen Fügefläche (6, 6') in Anzahl und Dimensionierung von der Höhe der Belastung in dem jeweiligen Schaufelbereich abhängige Hohlräume (7, 9) ausgebildet sind, **dadurch gekennzeichnet dass** sich die Hohlräume (7, 9) des Schaufelbasisteils (2) und des Schaufelspitzenteils (5) ausgehend von der jeweiligen Fügefläche (6, 6') in entgegengesetzte Richtungen erstrecken, wobei das Schaufelbasisteil (2) aus massivem Material und das Schaufelspitzenteil (5) aus massivem Material oder einer Blechkonstruktion besteht, und
dass zumindest das Schaufelbasisteil (2) mehrere, von der Fügefläche (6) ausgehende Hohlräume (7) aufweist, zwischen denen Versteifungsstege (8) des Schaufelbasisteils (2) ausgebildet sind.

2. Hohlfanschaufel nach Anspruch 1, **dadurch gekennzeichnet, dass** die Blechkonstruktion aus einer einen einzigen Hohlraum (9) umfassenden Außenwand besteht.

3. Hohlfanschaufel nach Anspruch 1, **dadurch gekennzeichnet, dass** die Blechkonstruktion an der Spitze offen ist.

4. Hohlfanschaufel nach Anspruch 1, **dadurch gekennzeichnet, dass** die in den massiven Schaufelteilen (2, 5) ausgebildeten Hohlräume (7, 9) einen in der Längsachse konstanten Querschnitt haben.

5. Hohlfanschaufel nach Anspruch 1, **dadurch gekennzeichnet, dass** die mehreren, von der Fügefläche (6) ausgehenden Hohlräume (7) eine im Wesentlichen rechteckige bis ovale oder runde Querschnittsfläche aufweisen.

6. Hohlfanschaufel nach Anspruch 1 oder 5, **dadurch gekennzeichnet, dass** die Tiefe der Hohlräume (7) in einem mittleren Bereich größer ist als in der Nähe der Vorderkante (VK) oder der Hinterkante (HK) der Hohlfanschaufel (1).

7. Hohlfanschaufel nach Anspruch 1, **dadurch gekennzeichnet, dass** auch im Schaufelspitzenteil (5) mehrere, von der Fügefläche (6') ausgehende Hohlräume (9) ausgebildet sind, zwischen denen Versteifungsstege (10) des Schaufelspitzenteils (5) ausgebildet sind.

8. Verfahren zur Herstellung einer Hohlfanschaufel nach Anspruch 1, **dadurch gekennzeichnet, dass** eine aus massivem Material bestehende Fanschaufel im oberen Bereich quer zur Längsachse getrennt wird oder zwei aus massivem Material bestehende, ein Schaufelbasisteil (2, 3) und ein Schaufelspitzenteil (5) umfassende Schaufelteile separat gefertigt werden und ausgehend von den Fügeflächen (6, 6') des jeweiligen Schaufelteils mit einem Materialabtragungsverfahren mehrere Hohlräume (7, 9) mit dazwischen angeordneten Versteifungsstegen (8, 10) in den Schaufelteilen (2, 5) ausgeformt und die Schaufelteile (2, 5) anschließend an den Fügekanten miteinander verschweißt werden.

9. Verfahren zur Herstellung einer Hohlfanschaufel nach Anspruch 1, **dadurch gekennzeichnet, dass** das Schaufelbasisteil (2) aus massivem Material gefertigt wird und ausgehend von der Fügefläche (6) durch Materialabtrag mehrere Hohlräume (7) mit dazwischen angeordneten Versteifungsstegen (8) ausgebildet werden, während das aus einer Blechkonstruktion bestehende hohle Schaufelspitzenteil (5) durch Verschweißen von in einem Umformprozess hergestellten Blechbauteilen gefertigt wird und die so ausgebildeten Schaufelteile (2, 5) an der Fügekante miteinander verschweißt werden.

## Claims

1. Hollow fan blade for the fan of an aircraft engine with cavities (7, 9) provided in the blade for weight reduction, consisting of blade portions, split transversely to the longitudinal axis of the blade, assembled at opposite joining surfaces (6, 6') by a joint connection (4) and including an airfoil (2, 5) and a blade root (3), said blade portions extending in opposite directions originating from the joint connection (4), with the joint connection (4) splitting the hollow fan blade (1) into a blade base section (2) adjoining the blade root (3) and into a blade tip section (5) forming the low-loaded blade tip area (5), and in which, originating from the respective joining surface (6, 6'), cavities (7, 9) are provided whose number and dimensioning depend on the load level in the respective blade area, **characterized in that** the cavities (7, 9) of the blade base section (2) and of the blade tip section (5) extend in opposite directions originating from the respective joining surface (6, 6'), with the blade base section (2) being made of solid material and the blade tip section (5) of solid material or of a sheet-metal structure, and that at least the blade base section (2) has several cavities (7) originating from the joining surface (6) and between which stiffening struts (8) of the blade base section (2) are provided.

2. Hollow fan blade in accordance with Claim 1, **characterized in that** the sheet-metal structure consists of an outer wall including one single cavity (9).

3. Hollow fan blade in accordance with Claim 1, **characterized in that** the sheet-metal structure is open at the tip.

4. Hollow fan blade in accordance with Claim 1, **characterized in that** the cavities (7, 9) provided in the solid blade portions (2, 5) have a constant cross-section in the longitudinal axis.

5. Hollow fan blade in accordance with Claim 1, **characterized in that** the several cavities (7) originating from the joining surface (6) have a substantially rectangular to oval or round cross-sectional area.

6. Hollow fan blade in accordance with Claim 1 or 5, **characterized in that** the depth of the cavities (7) is greater in a center area than in the vicinity of the leading edge (VK) or of the trailing edge (HK) of the hollow fan blade (1).

7. Hollow fan blade in accordance with Claim 1, **characterized in that** also in the blade tip section (5), several cavities (9) originating from the joining surface (6') are provided, between which stiffening struts (10) of the blade tip section (5) are designed.

8. Method for the manufacture of a hollow fan blade in accordance with Claim 1, **characterized in that a** fan blade made of solid material is split transversely to the longitudinal axis in its upper area, or two blade portions made of solid material and including a blade base section (2, 3) and a blade tip section (5) are separately produced and several cavities (7, 9) are formed in the blade portions (2, 5) originating from the joining surfaces (6, 6') of the respective blade portion by a material removal process, with stiffening struts (8, 10) being arranged between them, and the blade portions (2, 5) are subsequently joined at the abutting edges by welding.

9. Method for the manufacture of a hollow fan blade in accordance with Claim 1, **characterized in that** the blade base section (2) is made of solid material and, originating from the joining surface (6), several cavities (7) are formed by material removal, with stiffening struts (8) being arranged between them, while the hollow blade tip section (5) made of a sheet-metal structure is manufactured by welding of sheet-metal parts made in a forming process, and the blade portions (2, 5) so produced are joined at the abutting edge by welding.

## Revendications

1. Aube creuse de soufflante pour la soufflante d'un moteur d'avion pourvue de cavités (7, 9) conçues dans l'aube afin de réduire le poids, et composée d'éléments d'aube comprenant une pale (2, 5) et un pied d'aube (3), assemblés par une jonction (4) disposée sur des surfaces de jonction opposées (6, 6'), lesdits éléments s'étendant à partir de la jonction (4) en directions opposées, sachant que la jonction (4) sépare l'aube creuse de soufflante (1) en un élément de base d'aube (2) jouxtant le pied d'aube (3) et un élément de bout d'aube (5) formant la zone de bout d'aube soumise à des contraintes faibles, éléments dans lesquels sont formées des cavités (7, 9) partant de la surface de jonction (6, 6') respective et dépendant en nombre et en dimensionnement du niveau de contrainte exercée dans la zone d'aube concernée, **caractérisée en ce que** les cavités (7, 9) de l'élément de base d'aube (2) et de l'élément de bout d'aube (5) s'étendent en directions opposées partant de la surface de jonction (6, 6') respective, l'élément de base d'aube (2) étant fabriqué en matériau solide et l'élément de bout d'aube (5) étant fabriqué en matériau solide ou d'une construction en tôle, et qu'au moins l'élément de base d'aube (2) présente plusieurs cavités (7) partant de la surface de jonction (6), entre lesquelles sont formées des lames de renforcement (8) de l'élément de base d'aube (2).

2. Aube creuse de soufflante selon la revendication n° 1, **caractérisée en ce que** la construction en tôle est constituée d'une paroi extérieure comportant une seule cavité (9).

3. Aube creuse de soufflante selon la revendication n° 1, **caractérisée en ce que** la construction en tôle est ouverte à son bout.

4. Aube creuse de soufflante selon la revendication n° 1, **caractérisée en ce que** les cavités (7, 9) formées dans les éléments solides de l'aube (2, 5) présentent une section transversale constante le long de l'axe longitudinal.

5. Aube creuse de soufflante selon la revendication n° 1, **caractérisée en ce que** les multiples cavités (7) partant de la surface de jonction (6) présentent une section transversale essentiellement rectangulaire jusqu'à ovale ou ronde.

6. Aube creuse de soufflante selon la revendication n° 1 ou n° 5, **caractérisée en ce que** la profondeur des cavités (7) est plus grande dans une partie centrale qu'à proximité du bord d'attaque (VK) ou du bord de fuite (HK) de l'aube creuse de soufflante (1).

7. Aube creuse de soufflante selon la revendication n° 1, **caractérisée en ce que** dans l'élément de bout d'aube (5) sont également formées plusieurs cavités (9) partant de la surface de jonction (6') entre lesquelles sont formées des lames de renforcement (10) de l'élément de bout d'aube (5).

8. Procédé de fabrication d'une aube creuse de soufflante selon la revendication n° 1, **caractérisé en ce qu**'une aube de soufflante constituée d'un matériau solide est coupée dans sa partie supérieure en travers de son axe longitudinal ou que deux éléments d'aube constitués d'un matériau solide et comprenant un élément de base d'aube (2, 3) et un élément de bout d'aube (5) sont fabriqués séparément et que, partant des surfaces de jonction (6, 6') de l'élément d'aube respectif, plusieurs cavités (7, 9) sont usinées au moyen d'un procédé à enlèvement de matière dans les éléments d'aube (2, 5), avec des lames de renforcement (8, 10) arrangées entre elles, et que les éléments d'aube (2, 5) sont ensuite soudés les uns aux autres à leurs arêtes de jonction.

9. Procédé de fabrication d'une aube creuse de soufflante selon la revendication n° 1, **caractérisé en ce que** l'élément de base d'aube (2) est fabriqué en matériau solide et que, partant de la surface de jonction (6), plusieurs cavités (7) sont usinées par enlèvement de matière, avec des lames de renforcement (8) arrangées entre elles, alors que l'élément creux de bout d'aube (5) constitué d'une construction en tôle est fabriqué par soudage de composants en tôle obtenus par un procédé de formage et que les éléments d'aube (2, 5) ainsi formés sont soudés les uns aux autres à leur arête de jonction.
